Europäisches Patentamt

European Patent Office

Office européen des brevets

(19)

(11) **EP 0 732 505 A1**

(12) **EUROPEAN PATENT APPLICATION**

(43) Date of publication:
    **18.09.1996 Bulletin 1996/38**

(51) Int Cl.[6]: **F04D 21/00**, F04D 29/32

(21) Application number: **96400540.9**

(22) Date of filing: **15.03.1996**

(84) Designated Contracting States:
    **DE FR GB SE**

(30) Priority: **17.03.1995 JP 58819/95**

(71) Applicant: **RESEARCH INSTITUTE OF ADVANCED MATERIAL GAS-GENERATOR Tokyo (JP)**

(72) Inventors:
    • **Mizuta, Ikuhisa**
      **Mizuho-machi, Nishitama-gun, Tokyo (JP)**
    • **Chiba, Kaoru**
      **Mizuho-machi, Nishitama-gun, Tokyo (JP)**

(74) Representative: **Ilgart, Jean-Christophe et al**
    **c/o Société de Protection des Inventions,**
    **25, rue de Ponthieu**
    **75008 Paris (FR)**

(54) **Rotor blades for axial flow compressor**

(57)    Rotor blades (100) for an axial flow compressor is disclosed. The rotor blades (100) are positioned in a compression passage in the axial flow compressor. Each of the rotor blades (100) comprising: a leading edge (10a); a trailing edge (10b); a pressure surface (IOA), formed between the leading edge and the trailing edge, facing in the rotation direction of the rotor blades; a suction surface (10B), formed between the leading edge and the trailing edge, facing in the opposite direction of the rotation direction of the rotor blades; a thickness formed between the pressure surface and the suction surface, the thickness including a maximum thickness portion (10c); and a concave surface (20) formed on the suction surface (10B), at an area between the leading edge (10a) and the maximum thickness portion (10c). The concave surface (20) is directed toward the leading edge (10a) from the vicinity of the maximum thickness portion (10c), and has an angle-changing portion (20a) at which the concave surface (20) changes its curvature or angle which is directed toward the leading edge.

FIG.1

DIRECTION OF ROTATION

Printed by Jouve, 75001 PARIS (FR)

EP 0 732 505 A1

## Description

### BACKGROUND OF THE INVENTION

The present invention relates to rotor blades for an axial flow compressor constituting, for example, a gas turbine engine, and particularly, the present invention relates to technology for increasing compression efficiency in supersonic flow by reducing the intensity of shock waves.

In an axial compressor such as a fan/low pressure compressor or a high pressure compressor of a gas turbine engine, rotor blades are rotated by a disk, and air is thereby compressed and transferred backward.

In the case in which air reaching the space between the disk of the compressor and the casing (i.e., the compression passage) flows into a rotation area of the rotor blades due to rotation of the rotor blades, the front surface of each of the rotor blades in the rotation direction will be a pressure surface, and the back surface of each of the rotor blades in the rotation direction will be a suction surface. In an array of the rotor blades, at the portion in which the isobaric lines are dense between the leading edge of a rotor blade and the suction surface of the adjacent rotor blade, a shock wave is produced approximately perpendicular to the suction surface, and thus, the speed of the air flow is rapidly reduced and air is compressed.

However, in a compressor for a gas turbine engine or other kinds of axial flow compressors, if the shock waves in the blade array are intense, the pressure loss may increase, and separation of the boundary layer tends to occur at the suction surface of the rotor blade due to the rapid reduction of air flow at portions of the shock wave, which causes a decrease in compression efficiency.

### SUMMARY OF THE INVENTION

The present invention was developed in view of the above situation. It is an object thereof to provide rotor blades for an axial flow compressor, which blades can improve performance by decreasing the rapid reduction in the speed of air flow at portions of the shock wave at the rotation area of the rotor blades, and by preventing the separation of the boundary layer in the air flow.

In order to accomplish this object, the present invention provides:

Rotor blades for an axial flow compressor, the rotor blades being positioned in a compression passage in the axial flow compressor, each of the rotor blades comprising a leading edge, a trailing edge, a pressure surface formed between the leading edge and the trailing edge, facing in the rotation direction of the rotor blades, a suction surface formed between the leading edge and the trailing edge, facing in the opposite direction of the rotation direction of the rotor blades, and a thickness formed between the pressure surface and the suction surface, the thickness including a maximum thickness portion, characterized in that a concave surface is formed on the suction surface of the each rotor blade, at an area between the leading edge and the maximum thickness portion, the concave surface being directed toward the leading edge from the vicinity of the maximum thickness portion, the concave surface having an angle-changing portion at which the concave surface changes its curvature or angle which is directed toward the leading edge.

According to the rotor blades of the present invention, due to the concave surface having an angle-changing portion formed on the suction surface of each rotor blade, the intensity of a shock wave occurring between two adjacent rotor blades, in particular under supersonic flow conditions, is reduced, and thereby pressure loss at the rotor blades can be reduced. Furthermore, the rapid reduction in the speed of air flow at portions of the shock waves at the rotation area of the rotor blades can be prevented, thereby preventing the separation of the boundary layer in the air flow, thus improving the performance of the axial flow compressor.

The deflection angle at the point of the angle-changing portion and the position of the angle-changing portion may be varied as functions of the pitches of the rotor blades, Mach number of the inlet flow, and other dimensional factors which define the construction of the rotor blades, and then optimum conditions may be selected. The position of the angle-changing portion of the concave surface formed on the suction surface may be defined so that the position is located within 70% of the chord, from the leading edge, of the blade. In practice, the position of the angle-changing portion is preferably set as 40-50% of the chord, from the leading edge, of the blade. The deflection angle at the point of the angle-changing portion may be defined within 10°, and in practice, the deflection angle is preferably defined as 4° to 6°.

### BRIEF DESCRIPTION OF THE DRAWINGS

In the accompanying drawings:

Fig. 1 is a sectional view of the rotor blade in accordance with an embodiment of the present invention;
Fig. 2 is an elongated partial sectional view of the rotor blade shown in Fig. 1;
Fig. 3 is a sectional view of the rotor blade in accordance with an embodiment of the present invention, showing dimensions of the concave surface, and other areas;
Fig. 4 is a partial side view of the rotor blade in accordance with an embodiment of the present invention, showing an area of the concave surface to be formed on the blade;
Fig. 5 is a distribution chart of the shock waves and the pressure occurring in the array of rotor blades in accordance with the present invention;

Fig. 6 is a graph showing the relationships between the chord of a rotor blade and the blade surface Mach number of a blade shown in Fig. 1;

Fig. 7 is a partial schematic sectional view of the array of rotor blades of the present invention, showing the first and second shock waves generated.

Fig. 8 is a graph showing the relationships between the span of a rotor blade and the loss coefficient, for the rotor blade shown in Fig. 1 and for a conventional type;

Fig. 9 is a schematic sectional side view of an exemplary gas turbine engine;

Fig. 10 is a sectional view of a conventional rotor blade;

Fig. 11 is a distribution chart of the shock waves and the pressure occurring in the array of rotor blades shown in Fig. 10; and

Fig. 12 is a graph showing the relationships between the chord of a rotor blade and the blade surface Mach number of a blade shown in Fig. 10.

## DETAILED DESCRIPTION OF THE PREFERRED EMBODIMENTS

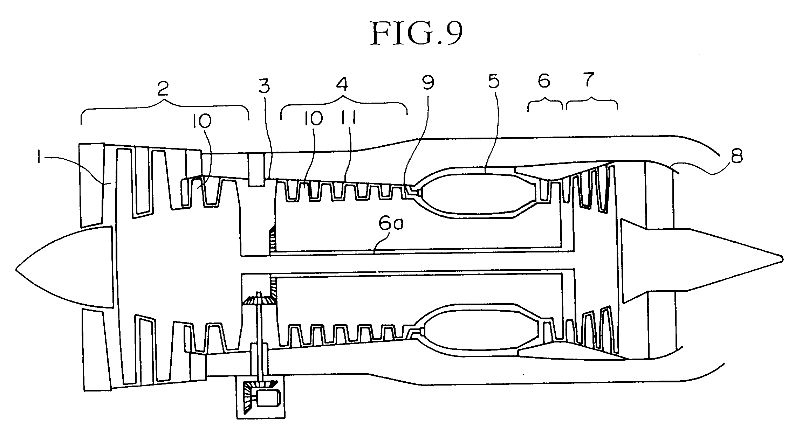

Fig. 9 shows an example of a construction of a conventional gas turbine engine (turbofan engine) for an aircraft. The gas turbine engine comprises air inlets 1, a fan/low pressure compressor 2, a fan bypass duct 3, a high pressure compressor 4, combustion chambers 5, a high pressure turbine 6, a turbine shaft 6a, a low pressure turbine 7, an exhaust duct 8, rotor disks or hub 9, rotor blades 10, and casings 11.

In an axial compressor such as the fan/low pressure compressor 2 or the high pressure compressor 4 of the gas turbine engine, rotor blades 10 are rotated by the disk 9, and air is thereby compressed and transferred backward.

In general, rotor blades are affixed to a disk at their ends, and a plurality of such disks having the rotor blades are coaxially aligned along a central axis and constitute a rotor assembly.

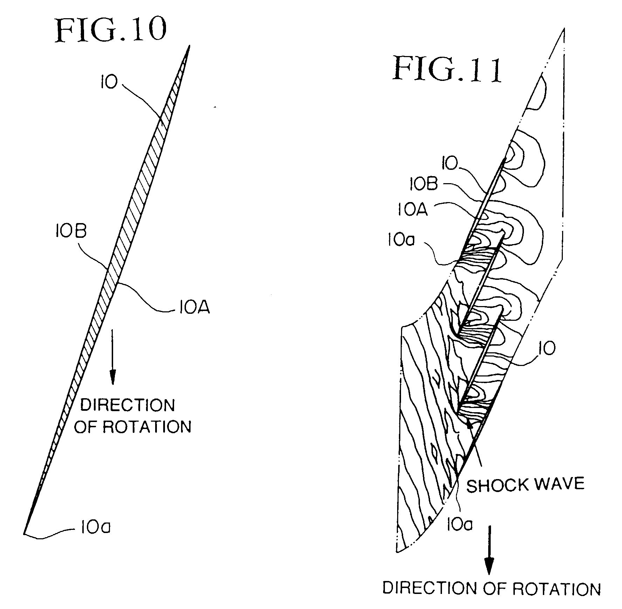

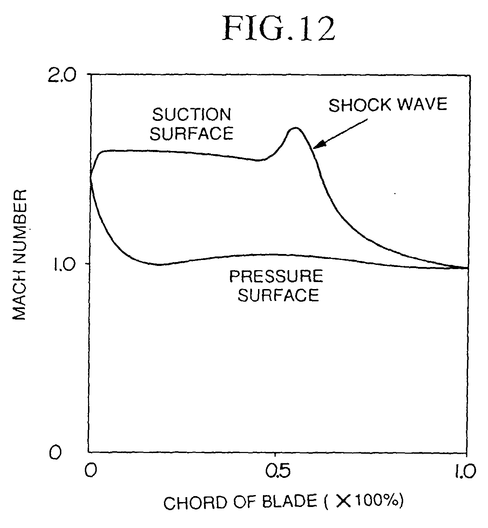

In the case in which air reaching the space between the disks 9 of the compressors 2 and 4 and the casing 11 (i.e., a compression passage) flows into a rotation area of the rotor blades 10 due to rotation of the rotor blades 10 in the direction as indicated by the arrow in Fig. 10, the front surface of each of the rotor blades in the rotation direction will be a pressure surface 10A, and the back surface of each of the rotor blades in the rotation direction will be a suction surface 10B. Fig. 11 shows a distribution of the static pressure adjacent to each rotor blade 10 in a supersonic flow condition. In the array of the rotor blades 10, at the portion in which the isobaric lines are densest between the leading edge 10a of a rotor blade 10 and the suction surface 10B of the adjacent rotor blade 10, shock waves are produced approximately perpendicular to the suction surface 10B, and thus, the speed of air flow is rapidly reduced and air is compressed.

However, in a compressor for a gas turbine engine or other kinds of axial flow compressors, if the shock waves in the blade array are intense, the pressure loss may increase, and separation of the boundary layer tends to occur at the suction surface 10B of the rotor blade 10 due to the rapid reduction of air flow at portions of the shock wave as shown in Fig. 12, which causes a decrease in the compression efficiency.

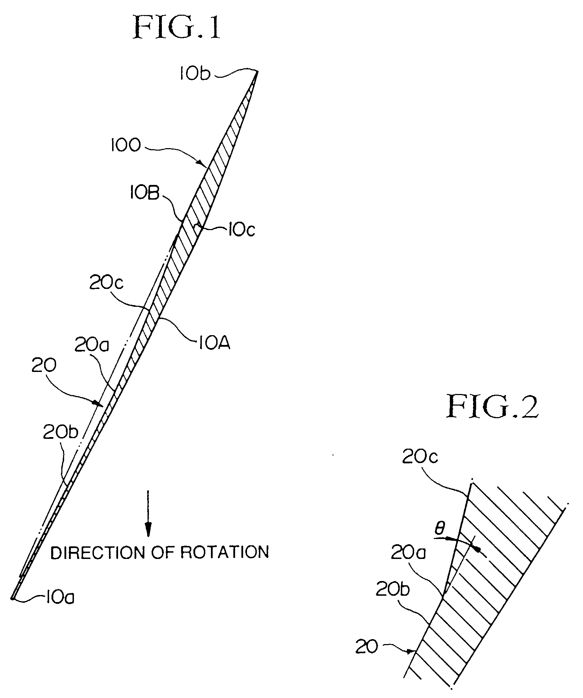

Rotor blades for an axial flow compressor in accordance with an embodiment of the present invention will be specifically explained hereinbelow with reference to Figs. 1-8. In this embodiment, the rotor blades are explained as adapted for a compressor of a gas turbine engine such as that shown in Fig. 9, for example.

Fig. 1 shows a sectional view of a rotor blade 100 in accordance with the present invention. The rotor blade 100 comprises a leading edge 10a; a trailing edge 10b; a pressure surface 10A, formed between the leading edge 10a and the trailing edge 10b, facing in the rotation direction of the rotor blade; a suction surface 10B, formed between the leading edge 10a and the trailing edge 10b, facing in the opposite direction of the rotation direction of the rotor blade; and a thickness formed between the pressure surface 10A and the suction surface 10B, the thickness including a maximum thickness portion 10c. As shown in Fig. 1, the sectional shape of the rotor blade 100 is defined by a combination of transverse lines of the pressure surface 10A and the suction surface 10B, which connect the leading edge 10a and the trailing edge 10b.

On the suction surface 10B of the rotor blade 100, a concave surface 20 is formed. The concave surface 20 is formed between the leading edge 10a and the maximum thickness portion 10c. In Fig. 1, the sectional shape of the suction surface of a conventional rotor blade, such as that shown in Fig. 10, is outlined by a chain line. The concave surface 20 has an angle-changing portion 20a between the leading edge 10a and the maximum thickness portion 10c. At the angle-changing portion 20a, the concave surface 20 changes its angle or curvature which is directed to the leading edge 10a. That is, the rate of change of the thickness from the maximum thickness portion 10c to the angle-changing portion 20a is greater than the rate of change of the thickness from the angle-changing portion 20a to the leading edge 10a.

Fig. 2 shows an enlarged view of the angle-changing portion 20a. As shown in Fig. 2, the concave surface 20 includes a front inclined face 20b and a rear inclined face 20c bounded by the angle-changing portion 20a, which have different inclinations. As a result of this, an deflection angle $\theta$ exists between the front inclined face 20b and the rear inclined face 20c. The deflection angle $\theta$ may be defined so as to fulfill the relationship below:

$$0° < \theta < 10°$$

In practice, the deflection angle θ will preferably be defined as 4° to 6°. In the present invention, each of the front inclined face 20b and the rear inclined face 20c may be formed as a flat face or a slightly concave face.

The angle-changing portion 20a will be located so as to fulfill the relationship below:

$$0 < (X/C) < 0.7$$

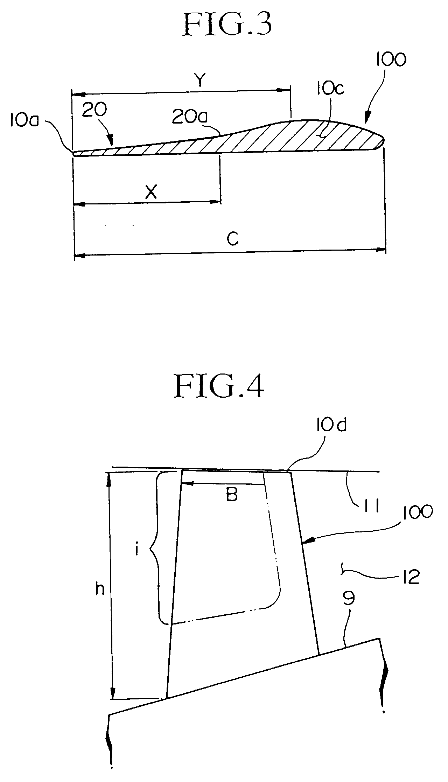

where C is the chord of the blade 10, and X is the dimension between the leading edge 10a and the angle-changing portion 20a (see Fig. 3). In practice, the value X/C will be preferably defined as 0.4 to 0.5.

In Fig. 3, Y indicates the dimension of the area of the concave surface 20 formed on the suction surface 10B of the blade 100 in the direction along the chord of the blade. The dimension Y will be defined so as to fulfill the relationship below:

$$0 < (Y/C) < 0.9.$$

Additionally, as shown in Fig. 4, the concave surface 20 is formed in the area where the Mach number of the speed of the inlet air flowing in the compression passage 12 formed between the disk (or hub) 9 and the casing 11 will be approximately 1 or more. For instance, as shown in Fig. 4, when the Mach number of the speed of the inlet air is approximately 1 or more at the area indicated by i in the span direction, it will be effective for the concave surface 20 to be formed within the area i.

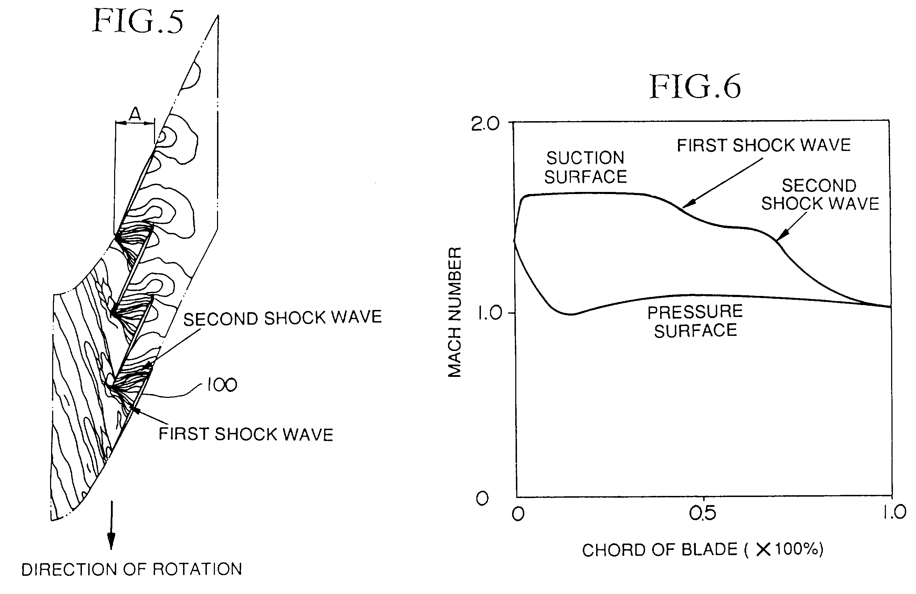

Fig. 5 shows a pressure distribution of the rotor blades 100 at a location of 95% of the height of blade (span), in accordance with an embodiment of the present invention. In this way, the pressure distribution was calculated in the conditions mentioned below:

Mach number of the speed of the inlet flow: 1.4
Height of blade (span) at span-transverse portion: 158 mm
Chord of blade: C=105 mm
X=47.25 mm
Y=77 mm
Projected scale of Y in the axis direction: B=27.6 mm
Thickness of the maximum thickness portion: 3.8 mm
Deflecting angle: θ =5°
Width of rotation area A: 38 mm

Here, the term "span" means the length of a blade in the radial direction, and the term "chord" means the dimension between the leading edge and the trailing edge of a blade. Of course, this represents only one example out of many possible variations on the present invention, and the various features of the present invention are not restricted to the values shown.

As shown in Fig. 5, with the rotor blades 100 of the present invention, two shock waves, that is, a first shock wave and a second shock wave, are produced between the leading edge of one rotor blade and the suction surface of the adjacent rotor blade, whereas only one shock wave is generated between two adjacent rotor blades, as shown in Fig. 11, in the case of rotor blades of a conventional type as shown in Fig. 10. Furthermore, it can also be found that in the case of rotor blades 10 of the conventional type as shown in Fig. 10, the shock wave is produced approximately perpendicular with respect to the suction surface of the adjacent rotor blade, whereas in the case of the rotor blades 100 of the present invention, the shock waves are generated obliquely with respect to the suction surface of the adjacent rotor blade.

It has been found that when a shock wave occurs obliquely with respect to the blade, the pressure loss due to the shock wave is smaller than when the shock wave occurs perpendicular to the blade. Furthermore, it has also been found that if two shock waves are produced in the same gap between two blades, the total pressure loss due to the shock waves is also smaller than when only one shock wave is produced.

Fig. 6 shows the result of an analysis of the relationships between the chord of a rotor blade and the blade surface Mach number of a blade in accordance with the embodiment of the present invention, with the conditions described above. It can be seen from Fig. 6 that, regarding the suction surface 10B of the blade 100, a) the first shock wave occurs at the portion of approximately 40% of the chord, from the leading edge, of the blade, and the second shock wave occurs at the portion of approximately 70% of the chord, from the leading edge, of the blade; and b) the Mach number is reduced after the first and second shock waves.

A comparison between the rotor blade 100 of the embodiment in accordance with the present invention and the rotor blade 10 of a conventional type shown in Fig. 10, comparing both Figs. 6 and 11, shows that, a) the peak Mach number before the shock waves of the rotor blade 100 in accordance with the present invention is more restricted as shown in Fig. 6 than that of the rotor blade of conventional type shown in Fig. 12; b) with the rotor blade 100 of the present invention, a rapid increase in Mach number before the shock waves is eliminated, whereas a rapid increase exists in the case of the rotor blade 10 of a conventional type, as shown in Fig. 12; and c) the reduction in Mach number of the rotor blade of the present invention is generally gentle because of its two-step-reduction of Mach number due to the two shock waves, and thus, the reduction in Mach number is achieved over a wide area of the chord of the blade.

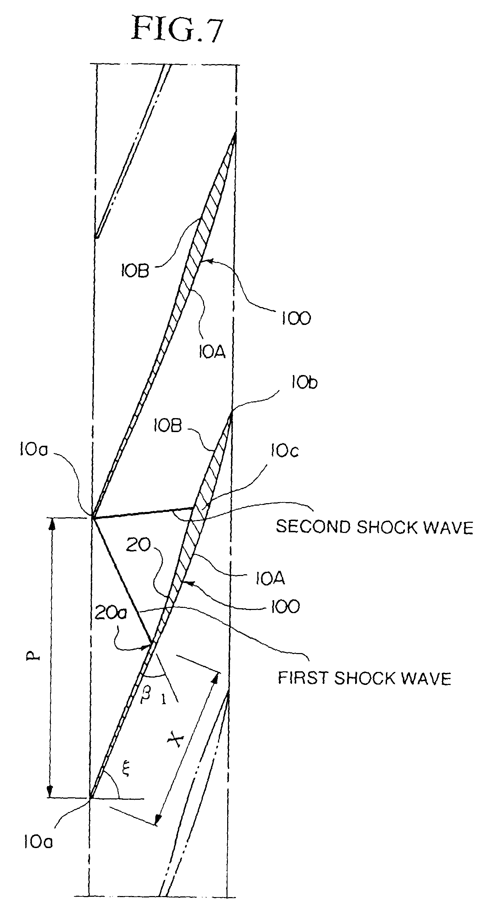

According to the inventors' analysis, it is recognized that with the rotor blade 100 in accordance with the present invention, as shown in Fig. 7, the first shock wave is produced between the angle-changing portion 20a and the leading edge 10a of the adjacent rotor blade, and the second shock wave is produced between the vicinity of the maximum thickness portion 10c and the leading edge 10a of the adjacent rotor blade.

Thus, by the rotor blades 100 in accordance with the present invention, it is possible to decrease the pressure loss by reducing the intensity of the shock waves, and to compress air with effective reduction in the speed of air flow by preventing the air flow at the suction surface of the rotor blade 10 from separating from the suction surface.

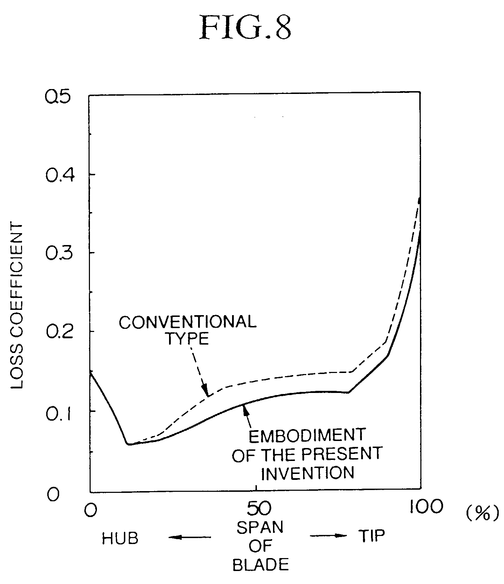

Fig. 8 shows the result of an analysis of the relationships between the height (span) of the rotor blade and loss coefficient, for the rotor blades of the embodiment. of the present invention with the conditions described above (which is indicated by a solid line) and for a conventional type (which is indicated by a dotted line).

In a comparison between these two types of rotor blades, it is apparent that the difference in loss coefficient between the rotor blade 100 in accordance with the present invention and the rotor blade of a conventional type becomes greater in the area more than 15% of the span. This shows that, with the rotor blade in accordance with the present invention, loss coefficient is reduced (that is, compression loss is reduced), thereby improving the performance of the axial flow compressor.

In the present invention, the shock wave setting angle $\beta_1$ (see Fig. 7) which is formed between the first shock wave and the axis of the rotor blade, can be varied and defined depending on the values of the deflection angle $\theta$ and the dimension X. Furthermore, the deflection angle $\theta$ and the dimension X can be varied and defined depending on the values of other parameters, such as blade pitch P, stagger angle $\xi$ (which is formed between the axis of each rotor blade and the axis of the rotation of the rotor), and the Mach number of inlet flow. For example, if both the blade pitch P and the angle $\theta$ are constant, as the Mach number to be set becomes greater, the angle-changing portion 20a will be set at a position nearer to the leading edge 10a.

Lastly, although the present invention has been explained, in the preferred embodiment described the above, in reference to an axial flow compressor for a gas turbine engine, one skilled in the art will understand that the present invention is also applicable and effective for, for example, an axial.flow compressor for a turbo fan engine or other types of axial flow compressors.

**Claims**

1. Rotor blades (100) for an axial flow compressor, said rotor blades being positioned in a compression passage (12) in said axial flow compressor, each of said rotor blades (100) comprising a leading edge (10a), a trailing edge (10b), a pressure surface (10A) formed between said leading edge and said trailing edge, facing in the rotation direction of said rotor blades, a suction surface (10B) formed between said leading edge and said trailing edge, facing in the opposite direction of the rotation direction of said rotor blades, and a thickness formed between said pressure surface and said suction surface, said thickness including a maximum thickness portion (10c), **characterized in that** a concave surface (20) is formed on said suction surface (10B) of said each rotor blade (100), at an area between said leading edge (10a) and said maximum thickness portion (10c), said concave surface (20) being directed toward said leading edge (10a) from the vicinity of said maximum thickness portion (10c), said concave surface having an angle-changing portion (20a) at which said concave surface (20) changes its curvature or angle which is directed toward said leading edge.

2. Rotor blades for an axial flow compressor according to Claims 1, wherein said concave surface is formed so that the rate of change of said thickness between said angle-changing portion and said maximum thickness portion is greater than the rate of change of said thickness between said angle-changing portion and said leading edge.

3. Rotor blades for an axial flow compressor according to Claim 1, wherein dimension X between said leading edge and said angle-changing portion of said concave surface is defined as

$$0 < (X/C) < 0.7$$

when the chord of said rotor blade is defined as C.

4. Rotor blades for an axial flow compressor according to Claim 3, wherein said dimension X is preferably defined as

$$0.4 \leq (X/C) \leq 0.5.$$

5. Rotor blades for an axial flow compressor according to Claim 1, wherein said concave surface includes a front inclined face located between said leading edge and said angle-changing portion and a rear inclined face located between said angle-changing portion and said maximum thickness portion, said front inclined face and said rear inclined face having a different inclination from each other and forming a deflection angle $\theta$ therebetween, said deflection angle $\theta$ being defined as

$$0° < \theta < 10°.$$

6. Rotor blades for an axial flow compressor according to Claim 5, wherein said deflection angle $\theta$ is preferably defined as

$$4° \leq \theta \leq 6°.$$

# FIG.1

10b

100

10B

10c

20c

10A

20a

20

20b

DIRECTION OF ROTATION

10a

# FIG.2

20c

$\theta$

20a

20b

20

# FIG.3

# FIG.4

# FIG.5

A

SECOND SHOCK WAVE

100

FIRST SHOCK WAVE

DIRECTION OF ROTATION

# FIG.6

SUCTION SURFACE

FIRST SHOCK WAVE

SECOND SHOCK WAVE

PRESSURE SURFACE

MACH NUMBER

CHORD OF BLADE ( ×100%)

EP 0 732 505 A1

# FIG.7

# FIG.8

CONVENTIONAL TYPE

EMBODIMENT OF THE PRESENT INVENTION

LOSS COEFFICIENT

HUB ← SPAN OF BLADE → TIP

FIG.9

## FIG.10

10

10B

10A

↓

DIRECTION
OF ROTATION

10a

## FIG.11

10

10B

10A

10a

10

10

SHOCK WAVE

10a

↓

DIRECTION OF ROTATION

# FIG.12

# EP 0 732 505 A1

**European Patent Office**

## EUROPEAN SEARCH REPORT

Application Number

EP 96 40 0540

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | FR-A-2 551 145 (ONERA)<br>* page 4, line 8 - line 28 * | 1,2,5 | F04D21/00<br>F04D29/32 |
| A | * page 6, line 31 - page 8, line 20 * | 3,4,6 | |
| X | US-A-2 628 768 (KANTROWITZ)<br>* column 4, line 65 - column 5, line 17 * | 1,2 | |
| A | | 3-6 | |
| X | GB-A-916 896 (SZYDLOWSKI)<br>* the whole document * | 1 | |
| X | GB-A-687 365 (ONERA)<br>* the whole document * | 1 | |
| X | GB-A-1 522 594 (GENERAL MOTORS)<br>* page 3, line 1 - page 30; figure 3 * | 1,2 | |
| A | | 3-6 | |
| X | US-A-2 579 049 (PRICE)<br>* column 9, line 45 - column 10, line 7; figures 8,9 * | 1,2 | TECHNICAL FIELDS SEARCHED (Int.Cl.6) |
| A | | 3-6 | F04D |
| A | US-A-2 934 259 (HAUSMANN) | | |

The present search report has been drawn up for all claims

| Place of search | Date of completion of the search | Examiner |
|---|---|---|
| THE HAGUE | 24 June 1996 | Teerling, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

14